# EUROPEAN PATENT SPECIFICATION

(11) **EP 3 384 226 B1**
(45) Date of publication and mention of the grant of the patent: **24.03.2021**
(21) Application number: 16809160.1
(22) Date of filing: 30.11.2016
(51) Int. Cl.: F41H 5/04, E04C 2/292, A43B 13/00, B32B 15/00

(54) **SHOCK ABSORPTION PANEL**
PLATTE ZUR STOSSDÄMPFUNG
PANNEAU D'ABSORPTION DES CHOCS

(30) Priority: 01.12.2015 GB 201521189
(43) Date of publication of application: 10.10.2018
(73) Proprietor: University of Surrey, Surrey GU2 7XH (GB); Fraunhofer Gesellschaft zur Förderung der angewandten Forschung e.V., 80686 München (DE)
(72) Inventor: SZYNISZEWSKI, Stefan, PL-00-521 Warszawa (PL); VOGEL, Rene, 09128 Chemnitz (DE); HIPKE, Thomas, 09432 Grossolbersdorf (DE)
(74) Representative: Hutter, Anton
(86) International application number: PCT/GB2016/053754
(87) International publication number: WO 2017/093722

(56) References cited:
- WO-A1-97/11843
- DE-A1- 3 119 578
- US-A- 3 708 380
- US-A- 3 708 385
- US-A- 3 711 363
- US-A1- 2003 046 831
- US-A1- 2009 004 499
- US-B1- 6 698 331

## Description

The invention related to shock absorption panels and footwear articles comprising such panels. The present invention relates also to security panels, which can be used in a wide range of safety and security applications, for example in a safe, a safety door, a fortified wall, a panic room or box, or a bank vault. The invention extends to the manufacture of the panels.

The sides of a conventional safe generally comprise steel panels. Similarly, reinforced walls, which may be used to define a safe room, are often reinforced with steel panels. Often the steel in these panels will be hardened in an attempt to prevent forcible entry. Handheld tools are powered with rechargeable battery packs, and the improvement and enhancement of battery technology and chemistry has significantly increased both the power and durability of cordless tools. For instance, the commercial introduction of lithium-ion batteries in the power tool sector has resulted in highly portable tools that are comparable in both power and effectiveness to mains powered tools. Accordingly, commercially available cordless drills, fitted with specialised high speed steel cutting parts, are now capable of penetrating hardened steel. Similarly, commercially available angle grinders are capable of cutting through the vast majority of construction materials including hardened steel. For instance, the burglars in the Hatton Garden heist, allegedly the largest burglary in English legal history, drilled through thick vault walls with an industrial power drill.

One obvious solution to prevent unauthorised entry through reinforced steel panels would be to simply increase the amount and thickness of material used in the construction of buildings or areas that require safeguarding. However, this would significantly increase the mass of the panels, leading to an increased cost of production, construction and transportation. It would also be difficult to use such panels to safeguard rooms that are elevated within structures, i.e. a vault located on a high level of a multi-storey building. Additionally, a door comprising a reinforced panel must be light enough that a person can open it manually, without the aid of a motor. Otherwise people could become trapped in a secure room in the event of motor failure.

Accordingly, enforced steel panels no longer offer the required level of protection.

US 6,698,331 B1 describes a multi-layer armour system. The system comprises a metallic foam, as a shock absorbing element, sandwiched between a high strength strike plate and a backing plate. In some embodiments, whisker reinforcements may be added to the metallic foam.

WO 97/11843 describes a building laminate comprising an aluminium foam and a surface layer. The foam is preferably reinforced by non-metallic (ceramic) particles.

The present invention arises from the inventors' work in trying to overcome the problems associated with the prior art.

In accordance with a first aspect of the invention, there is provided a shock absorption panel comprising a metallic foam having a plurality of rigid particles therein, wherein the rigid particles have a mean diameter of at least 1 mm.

Preferably, the shock absorption panel comprises a face plate disposed adjacent to the metallic foam.

The inventors believe that the present invention may be able to solve some of the problems associated with the prior art panels.

In accordance with a second aspect, there is provided an article of footwear comprising a sole, the sole comprising the shock absorption panel of the first aspect.

In accordance with a third aspect, there is provided a security panel comprising a face plate disposed adjacent to the shock absorption panel of the first aspect.

Advantageously, the metallic foam has a much lower density than traditional materials, while having a comparable stiffness and strength. Accordingly, the security panel has a lower density than traditional security panels, such as those comprising solid steel sheets. Additionally, unlike polymeric foam, the metallic foam is not flammable, and so does not present a fire risk. The metallic foam also has excellent energy absorption properties due to the fact that metallic foams can undergo large amounts of compressive strain without failure, when subject to impact or blast, as such high amounts of energy can be absorbed within the structure without the generation of excessive forces and stresses on the protected structure and panel supports. Accordingly, the metallic foam can be thought of as a 'bubble wrap' or packaging around the rigid particles. The rigid particles are therefore protected and able to prevent forced entry using various tools. The rigid particles are also able to stop the path of a projectile, such as a bullet.

The term "foam" may be understood to mean a structure comprising pockets of gas. The size and distribution of the pockets may vary throughout the foam. Accordingly, the foam may comprise a disordered or random structure.

The metallic foam may comprise aluminium, steel, zinc, titanium or a nickel alloy. However, in a preferred embodiment the metallic foam comprises aluminium. Advantageously, and preferably, in embodiments in which the metallic foam comprises aluminium, the metallic foam has a density of between 400 kg/m³ and 1300 kg/m³.

The metallic foam may comprise cells.

Preferably, the cells have a mean width of at least 0.1 mm. More preferably, the cells have a mean width of at least 0.5 mm, at least 1 mm or at least 1.5 mm. Most preferably, the cells have a mean width of at least 2 mm or at least 2.5 mm.

Preferably, the cells have a mean width of less than 15 mm. More preferably, the cells have a mean width of less than 10 mm, less than 7.5 mm or less than 5 mm. Most preferably, the cells have a mean width of less than 4 mm or less than 3 mm.

Preferably, the cells have a mean width of between 0.1 mm and 15 mm. More preferably, the cells have a mean width of between 0.5 mm and 10 mm, between 1 mm and 7.5 mm, or between 1.5 mm and 5 mm. Most preferably, the cells have a mean width of between 2 mm and 4 mm, or between 2.5 mm and 3 mm.

The metallic foam may comprise an open-cell structure or a closed-cell structure. Preferably, the metallic foam comprises a closed-cell structure. Advantageously, a closed-cell foam structure is simple to manufacture.

The term "open-cell structure" may be understood to refer to a foam comprising interconnecting pockets of gas. The term "closed-cell structure" may be understood to refer to a foam comprising discrete pockets of gas.

Preferably, the or each face plate is bonded to the metallic foam. In embodiments in which the face plate comprises a metal with a higher melting point than the metal which comprises the foam, the face plates can be bonded metallurgically to the foam during the foaming process.

The security panel preferably comprises a second face plate. Preferably, the second face plate is disposed opposite to the first face plate, such that the metallic foam creates an inner core. Accordingly, the security panel may comprise a sandwich panel, i.e. the panel comprises opposing first and second face plates disposed either side of the core.

The security panel may comprise side walls, which extend between the first and second face plates. Advantageously, the first and second face plates and the side walls seal the metallic foam core within the security panel. Preferably, the side walls are bonded to the metallic foam.

The or each face plate may comprise a ceramic material, a composite material, a polymer, a metal or a metal alloy. The ceramic material may comprise glass, silicon, fumed silica, alumina, silicon carbide, tungsten carbide and/or clay. Clay may comprise kaolinite or other ceramics. The composite material may comprise a fibre-reinforced polymer, preferably a carbon fibre reinforced polymer. The polymer may comprise a thermoset resin, polyethylene, polypropylene, polyester, vinyl ester or nylon. The thermoset resin may comprise epoxy.

However, preferably the or each face plate comprises a metal or a metal alloy. The metal or metal alloy preferably comprises aluminium, steel, stainless steel, titanium, or a metal matrix composite (MMC), such as a ceramic fibre reinforced metal plate. More preferably, the or each face plate comprises steel.

Advantageously, steel face plates reduce the cost of the final product, while maintaining efficiency against specified threats.

In embodiments in which they are present, the side walls may comprise the same material as the face plates.

Preferably, the or each face plate has a thickness of at least 0.1 mm, more preferably at least 0.2 mm, 0.3 mm, 0.4 mm or 0.5mm, and most preferably at least 1.0 mm or 1.5 mm thick. More preferably, the or each face plate has a thickness of between 0.1 mm and 10.0 mm, more preferably between 0.2 mm and 9.0 mm, between 0.3 mm and 8.0 mm, between 0.4 mm and 7.0 mm, or between 0.5 mm and 6.0 mm, and most preferably between 1.0 mm and 3.0 mm, or between 1.5 mm and 2.5 mm thick.

The rigid particles comprise macroscopic rigid particles. The rigid particles preferably have a mean diameter of at least 2 mm, 3 mm, 4 mm or 5 mm. Most preferably, the rigid particles have a mean diameter of at least 6 mm, 7 mm, 8 mm, 9 mm or 10 mm. The rigid particles preferably have a mean diameter of between 1 mm and 100 mm, more preferably between 2 mm and 90 mm, between 3 mm and 80 mm, between 4 mm and 70 mm or between 5 mm and 60 mm. Most preferably, the rigid particles have a mean diameter of between 6 mm and 50 mm, between 7 mm and 40 mm, between 8 mm and 30 mm, between 9 mm and 20 mm, or between 10 mm and 15 mm.

According to the invention the rigid particles are substantially spherical.

In a preferred embodiment, the metallic foam comprises cells having a mean width, and the rigid particles have a mean diameter or width.

Preferably, the mean diameter of the rigid particles is at least as large as the mean width of the cells. More preferably, the mean diameter of the rigid particles is at least twice as large or three times as large as the mean width of the cells. Most preferably, the mean diameter of the rigid particles is at least four times as large as the mean width of the cells.

Preferably, the mean diameter of the rigid particles is between the mean width of the cells and fifteen times the mean width of the cells. More preferably, the mean diameter of the rigid particles is between two times the mean width of the cells and ten times the mean width of the cells or between three times the mean width of the cells and seven times the mean width of the cells. Most preferably, the mean diameter of the rigid particles is between four times the mean width of the cells and five times the mean width of the cells.

Preferably, the rigid particles comprise a material having a higher melting point than the metallic foam. Advantageously, the metallic foam can be formed around the rigid particles without melting the rigid particles.

Preferably, the rigid particles comprise ceramic particles. The ceramic particles may comprise glass, silicon, fumed silica, alumina, silicon carbide, tungsten carbide and/or clay. Clay may comprise kaolinite.

Preferably, the rigid particles are not bonded to the metallic foam. The rigid particles maybe disposed in the metallic foam in a spaced apart configuration. Preferably, the rigid particles are disposed in the metallic foam in one or more layers, more preferably at least two, three, four or five layers. In a preferred embodiment, the rigid particles are substantially disposed in two or more layers.

It may be understood that where there are at least two layers of rigid particles, each layer may not be completely distinct from the adjacent layers. For example, in the embodiment where there are two layers of particles, some particles may be disposed between the layers but the particles maybe considered to define two layers if the particles are disposed across a thickness which is equal to or greater than two times the diameter or width of the particles.

The volume fraction of the metallic foam occupied by the rigid particles is preferably at least 5% of the foam, more preferably at least 10%, 15% or 20%, and most preferably at least 25% or 30% of the foam. The volume fraction of the metallic foam occupied by the rigid particles is preferably between 5% and 80%, more preferably between 10% and 70%, between 15% and 60% or between 20% and 50%, and most preferably between 25% and 45% or between 30% and 40%.

Preferably, the metallic foam comprises at least one wire disposed therein. More preferably, the foam comprises a plurality of wires therein. The or each wire may form a layer which is substantially adjacent to the first face plate. The or each wire may form a layer which is substantially adjacent to the second face plate. In embodiments in which the rigid particles are disposed in at least two layers, the or each wire may form a layer between adjacent layers of rigid particles.

In a preferred embodiment, therefore, the security panel comprises mutually opposing first and second face plates disposed either side of an inner core comprising a metallic foam with a plurality of rigid particles and one or more wires disposed therein. Preferably, the rigid particles are disposed in first and second layers and the or each wire defines a first layer of wires disposed between the first face plate and the first layer of rigid particles, and a second layer of wires disposed between the first and second layers of rigid particles. Preferably, the wires define a third layer of wires disposed between the second layer of rigid particles and the second face plate.

Advantageously, the or each wire supports the plurality of rigid particles during manufacture of the security panel, thereby ensuring a more even distribution thereof.

Preferably, the or each wire comprises a material having a higher melting point than the metallic foam. Advantageously, the metallic foam can be formed around the or each wire without melting the or each wire.

The or each wire may comprise a metal, a metal alloy or a ceramic material. The metal or metal alloy may comprise any suitable metal or metal alloy, such as steel or stainless steel. However, preferably, the metal alloy comprises a superalloy, such as Nichrome, Chromel or Inconel. Most preferably, the metal alloy comprises Nichrome.

It may be appreciated that a superalloy is an alloy that exhibits excellent mechanical strength, resistance to thermal creep deformation, good surface stability and resistance to corrosion or oxidation.

The ceramic material may comprise glass, silicon, fumed silica, alumina, silicon carbide, tungsten carbide and/or clay. Clay may comprise kaolinite.

Preferably, the or each wire has a mean diameter of at least 0.1 mm, more preferably at least 0.2 mm, 0.3 mm or 0.4 mm, and most preferably at least 0.5 mm in diameter. Preferably, the or each wire has a mean diameter of between 0.1 mm and 10.0 mm, more preferably between 0.2 mm and 5.0 mm, between 0.3 mm and 4.0 mm or between 0.4 mm and 3.0 mm, and most preferably between 0.2 mm and 2.0 mm in diameter. In some embodiments, wire of the same mean diameter is used throughout the security panel. However, in another embodiment, wires of different diameters may be used. For example, wire comprising diameters of both 0.5 mm and 1.0 mm maybe used.

Preferably, the foam is not bonded to the or each wire. Preferably, the or each wire defining the or each layer of wires defines a mesh or a mesh like structure. It will be appreciated that a "mesh like structure" can mean that the or each wire comprises a first group of wires which are disposed spaced apart and substantially parallel to each other, and a second group of wires which are disposed spaced apart and substantially parallel to each other, and the wires in the second group overlap the wires in the first group and are disposed substantially perpendicular thereto. The groups of wires may or may not be interwoven.

In embodiments in which the or each wire forms a mesh, the mesh preferably comprises an unbonded mesh. It will be appreciated that in an unbonded mesh the wires are interwoven but relative movement between the wires is possible. Advantageously, the inventors have found that an unbonded mesh tangles a drill.

Each wire may be spaced apart from an adjacent and substantially parallel wire by at least 0.5 mm or 1.0 mm, more preferably at least 2.0 mm or 3.0 mm, most preferably 4.0 mm or 5.0 mm. Accordingly, in embodiments in which the or each wire creates a mesh, the mesh preferably has a mesh size of at least 0.5 mm or 1.0 mm, more preferably at least 2.0 mm or 3.0 mm, and most preferably at least 4.0 mm or 5.0 mm.

Preferably, each wire may be spaced apart from an adjacent and substantially parallel wire by between 0.5 mm and 40.0 mm, or between 1.0 mm and 30.0 mm, more preferably between 2.0 mm and 25.0 mm, or between 3.0 mm and 20.0 mm, and most preferably between 4.0 mm and 15.0 mm, or between 5.0 mm and 10.0 mm. Accordingly, in embodiments in which the or each wire creates a mesh, the mesh preferably has a mesh size of between 0.5 mm and 40.0 mm, or between 1.0 mm and 30.0 mm, more preferably between 2.0 mm and 25.0 mm, or between 3.0 mm and 20.0 mm, and most preferably between 4.0 mm and 15.0 mm, or between 5.0 mm and 10.0 mm.

Advantageously, by spacing adjacent wires apart, the foam is able to flow between the wires as it forms during manufacture of the security panel.

The security panel of the third aspect can be used to prevent forced entry.

Thus, the application also describes use of the security panel of the third aspect to prevent forced entry.

In a fourth aspect, there is provided a method of preventing forced entry into a secure zone, the method comprising applying the security panel of the third aspect to a secure zone.

The secure zone may be any area, device or apparatus, which requires security or safety to prevent forced entry therein. For example, the secure zone maybe a safe, a safety door, a fortified wall, a panic room, a panic box, a bank vault, a prison or prison facility, a data centre, or a vehicle.

Hence, in accordance with a fifth aspect, there is provided a safe, a safety door, a fortified wall, a panic room, a panic box, a bank vault, a prison or prison facility, a data centre, or a vehicle comprising the panel of the third aspect.

The security panel of the third aspect can also be used to stop or deflect projectiles.

The inventors have also devised a method of manufacturing the security panel of the invention.

Hence, in accordance with a sixth aspect, there is provided a method of manufacturing a security panel, the method comprising providing at least one face plate, and disposing a metallic foam with a plurality of rigid particles disposed therein adjacent to the at least one face plate, to thereby produce a security panel.

Preferably, the security panel is as defined with respect to the third aspect.

Preferably, the metallic foam is prepared by placing metallic powder, a foaming agent and a plurality of rigid particles within a mould.

Preferably, the foaming agent comprises at least 0.01 wt% of the metallic powder, more preferably, at least 0.05 wt%, 0.10 wt%, 0.15 wt%, 0.20 wt%, 0.25 wt% or 0.30 wt% of the metallic powder, most preferably at least 0.35 wt% or 0.4 wt% of the metallic powder. Preferably, the foaming agent comprises less than 10 wt% of the metallic powder, more preferably, less than 5.0 wt%, 4.5 wt%, 4.0 wt%, 3.5 wt%, 3.0 wt% or 2.5 wt% of the metallic powder, most preferably, less than 2.0 wt% or 1.5 wt% of the metallic powder.

Preferably, the foaming agent comprises between 0.01 wt% and 10 wt% of the metallic powder, more preferably, between 0.05 wt% and 5 wt%, between 0.10 wt% and 4.5 wt%, between 0.15 wt% and 4.0 wt%, between 0.20 wt% and 3.5 wt%, between 0.25 wt% and 3.0 wt% or between 0.30 wt% and 2.5 wt% of the metallic powder, most preferably between 0.35 wt% and 2.0 wt% or 0.4 wt% and 1.5 wt% of the metallic powder.

Preferably, the metallic powder and foaming agent are mixed to obtain a substantially uniform mixture. Preferably, the step of mixing the metallic powder and foaming agent comprises placing the metallic powder and foaming agent in an automated mixing chamber and agitating the metallic powder and foaming agent using a rotating impeller. Preferably, the step of mixing the metallic powder and foaming agent also comprises disposing ball bearings in the automated mixing chamber.

Preferably, the method comprises a step of consolidating the uniform powder mixture. Preferably, the step of consolidating the uniform powder mixture comprises consolidating the uniform powder mixture via cold compaction.

Preferably, the method comprises a step of extruding the consolidated uniform powder mixture through an extrusion die to obtain a dense plate of material. Preferably, the method comprises cutting the dense plate of material into pieces comprising the metallic powder and foaming agent. The pieces comprising the metallic powder and foaming agent may comprise any cross-section. Preferably, the pieces has a length of at least 10 mm, more preferably, at least 20 mm, 30 mm, 40 mm or 50 mm, and most preferably, at least 60 mm, 70 mm, 80 mm, 90 mm or 100 mm. The pieces may have a length of less than 10,000 mm, more preferably less than 9,000 mm, 8,000 mm, 7,000 mm or 6,000 mm, and most preferably less than 5,000 mm.

Accordingly, the pieces of the dense plate of material (comprising the metallic powder and the foaming agent) and the rigid particles may be place in the mould.

Preferably, the method comprises attaching the at least one face plate to the metallic foam.

The at least one face plate may be attached to the metallic foam after the metallic foam has been prepared. The metallic foam may be attached to the at least one face plate by using epoxy to bond the at least one face plate to the metallic foam or by reaction brazing.

However, in a preferred embodiment, the metallic foam is prepared between first and second face plates. Accordingly, the first and second face plates may define the mould. Preferably, pieces of the dense plate of material (comprising the metallic powder and the foaming agent) and the rigid particles are placed between the first and second face plates.

Advantageously, the foam is attached to the face plates due to metallic bonds forming therebetween as the foam is created.

The metallic powder, which forms the foam, may comprise aluminium, steel, zinc, titanium or a nickel alloy. However, in a preferred embodiment the metallic powder comprises aluminium.

The foaming agent may comprise titanium hydride (TiH2), zirconium hydride (ZrH2) or calcium carbonate (CaCo₃). Preferably, the foaming agent comprises titanium hydride.

The rigid particles are substantially spherical and have a mean diameter of at least 1 mm.

Preferably, the method comprises arranging the plurality of rigid particles such that they define a first layer of rigid particles substantially adjacent to the first face plate. Preferably, the first layer of rigid particles comprises pieces of the dense plate of material (comprising the metallic powder and the foaming agent). Preferably, the pieces of the dense plate of material comprise one or more rows in the first layer of rigid particles. Preferably, the one or more rows of the pieces of the dense plate of material are disposed between rows of rigid particles. Preferably, the rows of the pieces of the dense plate of material and the rows of rigid particles in the first layer of rigid particles extend in a first direction.

Preferably, the method comprises arranging the plurality of rigid particles such that they define a second layer of rigid particles substantially adjacent to the first layer of rigid particles. Preferably, the second layer of rigid particles comprises pieces of the dense plate of material (comprising the metallic powder and the foaming agent). Preferably, the pieces of the dense plate of material comprise one or more rows in the second layer of rigid particles. Preferably, the one or more rows of the pieces of the dense plate of material are disposed between rows of rigid particles. Preferably, the rows of the pieces of the dense plate of material and the rows of rigid particles in the second layer of rigid particles extend in a second direction. Preferably, the second direction is substantially perpendicular to the first direction.

Preferably, the method comprises selecting the plurality of rigid particles to occupy a volume fraction of at least 5% of the volume between the first and second face plate, more preferably at least 10%, 15% or 20%, most preferably at least 25% or 30%. The volume fraction between the first and second face plates occupied by the rigid particles is preferably between 5% and 80%, more preferably between 10% and 70%, between 15% and 60% or between 20% and 50%, and most preferably between 25% and 45% or between 30% and 40%.

In a preferred embodiment during the step of placing the metallic powder, the foaming agent and the plurality of rigid particles adjacent to the at least one face plate, the method also comprises placing at least one wire adjacent to the or each face plate.

Preferably, the method comprises placing a first layer of wires substantially adjacent to the first face plate. Preferably, the method comprises placing a first layer of rigid particles, preferably comprising pieces of the dense plate of material (comprising the metallic powder and the foaming agent), substantially adjacent to the first layer of wires. Preferably, the method comprises placing a second layer of wires substantially adjacent to the first layer of rigid particles, such that the first and second layers of wires are disposed on opposing sides of the first layer of rigid particles. Preferably, the method comprises placing a second layer of rigid particles, preferably comprising pieces of the dense plate of material (comprising the metallic powder and the foaming agent) substantially adjacent to the second layer of wires, such that the first and second layers of rigid particles are disposed on opposing sides of the second layer of rigid particles. Preferably, the method comprises placing a third layer of wires substantially adjacent to the second layer of rigid particles, such that the second and third layers of wires are disposed on opposing sides of the second layer of rigid particles.

Preferably, the or each wire is as defined in the third aspect.

Preferably, prior to the step of placing the metallic powder, the foaming agent, the plurality of rigid particles and the plurality of wires, in embodiments where they are present, between the first and second face plates the method comprises a step of attaching side walls to the first face plate to define a volume. Preferably the step of attaching the side walls to the first face plate comprises welding the side walls to the first face plate. Preferably, the step of welding the side walls to the first face plate comprises using metal inert gas (MIG) welding.

Preferably, the method comprises placing the metallic powder, the foaming agent, the foaming agent, the plurality of rigid particles and the plurality of wires, in embodiments where they are present, in the volume defined by the first face plate and the side walls and then attaching the second face plate to the side walls. Preferably, the step of attaching the second face plate to the side walls comprises welding the second face plate to the side walls. Preferably, the step of welding the second face plate to the side walls comprises using metal inert gas (MIG) welding.

Advantageously, the first and second face plates and the side walls define the mould around the metallic powder, the foaming agent, the plurality of rigid particles and the plurality of wires, in embodiments where they are present.

The first and second face plate and the side walls, in embodiments where they are present are preferably as defined in the third aspect. Accordingly, the first and second face plate and the side walls, in embodiments where they are present, may comprise a metal or a metal alloy. The metal or metal alloy comprising the first and second face plates and the side walls, in embodiments where they are present, preferably has a higher melting point than the metal which comprises the metallic powder. The first and second face plates and the side walls, in embodiments where they are present, may comprise steel.

The thickness of the first and second face plates and the side walls, in embodiments where they are present, is preferably as defined in the third aspect.

Preferably, the method comprises heating the panel structure to at least 470 °C to allow the metallic foam to form. The step of heating the panel structure preferably comprises heating the panel structure to at least 500 °C, more preferably at least 550 °C, 600 °C, 650 °C or 700 °C, and most preferably at least 750 °C. Preferably, the step of heating the panel structure comprises heating the panel structure to between 470 °C and 1300 °C, more preferably between 500 °C and 1200 °C, between 550 °C and 1100 °C, between 600 °C and 1000 °C or between 650 °C and 900 °C, and most preferably between 700 °C and 800 °C.

Preferably, the step of heating the panel structure is maintained for at least 1 minute, more preferably at least 2 minutes, 3 minutes, 4 minutes, 5 minutes, 6 minutes, 7 minutes, 8 minutes, 9 minutes or 10 minutes, most preferably at least 11 minutes, 12 minutes, 13 minutes, 14 minutes or 15 minutes. Preferably, the step of heating the panel structure is maintained for less than 120 minutes, more preferably less than 60 minutes, 55 minutes, 50 minutes, 45 minutes, 40 minutes, 35 minutes, or 30 minutes, most preferably less than 29 minutes, 28 minutes, 27 minutes, 26 minutes or 25 minutes. Preferably, the step of heating the panel structure is maintained for between 1 minute and 120 minutes, more preferably between 2 minutes and 60 minutes, between 3 minutes and 55 minutes, between 4 minutes and 50 minutes, between 5 minutes and 45 minutes, between 6 minutes and 40 minutes, between 7 minutes and 35 minutes, or 10 minutes and 30 minutes, most preferably between 11 minutes and 29 minutes, between 12 minutes and 28 minutes, between 13 minutes and 27 minutes, between 14 minutes and 26 minutes or between 15 minutes and 25 minutes.

Preferably, after heating, the panel is allowed to cool to obtain the security panel.

Preferably, the step of allowing the panel to cool comprises exposing the panel to room temperature air. The room temperature air may be blown over the surface of the panel.

For a better understanding of the invention, and to show how embodiments of the same may be carried into effect, reference will now be made, by way of example, to the accompanying Figures, in which:-
**Figure 1** is a schematic cross-sectional side view of a first embodiment of a panel in accordance with the present invention;
**Figure 2** schematically illustrates one embodiment of a method of manufacturing the panel of the invention;
**Figure 3A** is a photo of a partially assembled second embodiment of the panel according to the invention;
**Figure 3B** is a schematic cross-sectional side view of the panel obtained from the partially formed panel shown in Figure 3A;
**Figures 4A** **and** **4B** are photos of a partially assembled third embodiment of the panel according to the invention;
**Figure 4C** is a schematic cross-sectional side view of the panel obtained from the partially formed panel shown in Figures 4A and 4B;
**Figure 5** is a photo of new and worn cutting blades for an angle grinder;
**Figures 6A and 6B** are photos of panels attacked by the angle grinder;
**Figure 7** is a photo of an aluminium foam cylinder which has been exposed to an abrasive water jet; and
**Figure 8** is a cross-sectional X-ray computed tomography (CT) scan of a panel in accordance with the invention.

### Example 1 - Security Panel

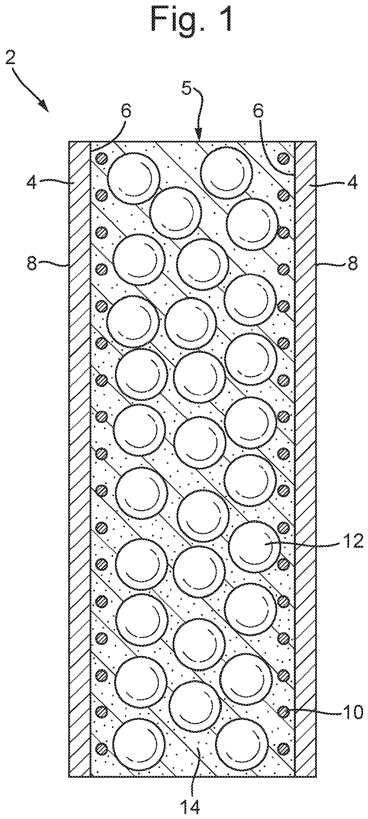

Figure 1 shows a security panel 2 in accordance with the present invention. The panel 2 comprises two mutually opposing face plates 4 disposed either side of an inner core 5. In the illustrated embodiment, both the face plates 4 comprise steel with a cross-sectional thickness of 2 mm. Each of the face plates 4 defines an internal surface 6, which is disposed adjacent to the inner core 5, and an outwardly facing external surface 8. The inner core 5 has a cross-sectional thickness of 36 mm, giving the panel 2 a total thickness of 40 mm.

Two spaced apart networks of wires 10 are arranged into two separate mesh-like structures, each of which is disposed substantially adjacent to the internal surfaces 6 of the opposing face plates 4. The wires 10 are arranged to create a mesh-like configuration with the average distance between the adjacent wire centres being about 3 mm or more to allow for foam penetration during the manufacturing process. The diameter of the wires 10 forming the method can be between 0.5 mm to 1 mm. For example, a mixture of 0.5 mm and 1.0 mm diameter wires 10 can be used to randomly form the mesh-like structure. In the illustrated embodiment, the wires 10 comprise Nichrome, which is an alloy of nickel and chromium. It will be appreciated that in alternative embodiments other superalloys, such as Chromel (an alloy of nickel and chromium) and Inconel (an alloy of nickel containing chromium and iron), could be used.

Between the two layers of wires 10 there are disposed a plurality of ceramic spheres 12. In the illustrated embodiment, the ceramic spheres comprise baking beans with an average diameter of 13 mm. However, higher grade ceramic inclusions could be used in alternative embodiments for multi-hazard protection.

The wires 10 and ceramic spheres 12 are embedded in a metallic foam 14, which can be a closed-cell aluminium foam. The metallic foam 14 is bonded to the internal surface 6 of each of the face plates 4. Together, the wires 10, spheres 12 and metallic foam 14 define the inner core 5. The core 5 has several functions. Firstly, it enables composite action between the face plates 4 to enhance the bending rigidity of the panel 2, i.e. the panel 2 is a stiff and lightweight plate.

A sandwich panel 2 with stiff face plates 4 disposed either side of a core 5 offer higher bending rigidity than a solid panel of the same weight, provided the face plates 4 work together i.e. when one of the face plates 4 is tension the other is in compression. The face plates 4 can work together in this way if the core 5 is sufficiently stiff. If the core 5 is too soft then the face plates 4 cease to work together and bend locally like independent sheets. Accordingly, both the face plates 4 and the core 5 are important in ensuring that the panel 2 achieves higher bending rigidity at a lower weight than a solid panel.

The core 5 is porous, compressible and crushable, and therefore allows for localized impact energy dissipation and other short duration/impulsive loads. In particular, the core 5 dramatically improves the ability of the panel 2 to withstand an explosion. Finally, the metallic foam 14 protects the ceramic spheres 12 from impulsive loads applied to the entire panel 2, such as a blast. Accordingly, the metallic foam 14 can be thought of as a 'bubble wrap' or packaging around the ceramic spheres 12. The ceramic spheres 12 are therefore protected and able to stop various blades and drills, as described below.

The metallic foam 14 has a lower density than solid materials, thus it exhibits a potential for weight reduction. Foaming reduces not only weight but also the material's Young's modulus. The benefits from increasing the thickness exceed the loss in the material stiffness for bending applications. Bending rigidity increases as a cubic function of the thickness, while the material's Young's modulus decreases as a quadratic function of thickness increase (from foaming). Thus, the net effect is linear increase in bending rigidity.

The metallic foam 14 also has excellent energy absorption properties due to the fact metallic foams undergo large amounts of strain whilst transferring almost constant stress to the supports, as such high amounts of energy can be absorbed within the structure without the generation of peak stresses in the supports that could be damaging to the protected structure (Ashby, et al., 2000) (Gibson, 2000).

In the above embodiment, the wires 10 improve the distribution of the ceramic spheres 12 within the core and hinder forcible entry using a thermal lance, as explained below.

It should also be noted that none of the components of the secure panel 2 are flammable. Accordingly, the panel 2 does not present a fire risk.

### Example 2 - Manufacture of a security panel

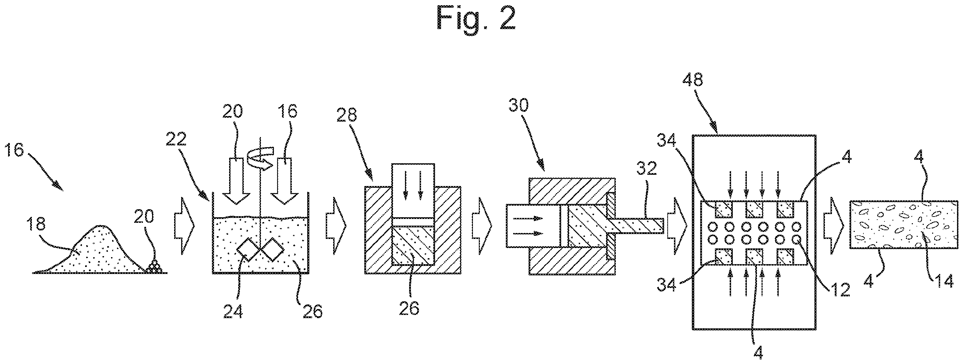

Security panels 2 in accordance with the present invention are produced following a powder metallurgical production route 16, shown schematically in Figure 2.

Aluminium powder 18 is mixed together with between 0.4 to 1.4 wt% titanium hydride (TiH) 20, a foaming agent. The mixing occurs in an automated mixing chamber 22 which utilises a rotating impeller 24 and steel ball bearings (not shown) to ensure a uniform mixture. After the mixing stage has been completed, the powder mixture 26 is consolidated via cold compaction in a compressor and then extruded through an extrusion die 30 resulting in a dense plate of material 32, which is cut into small pieces 34.

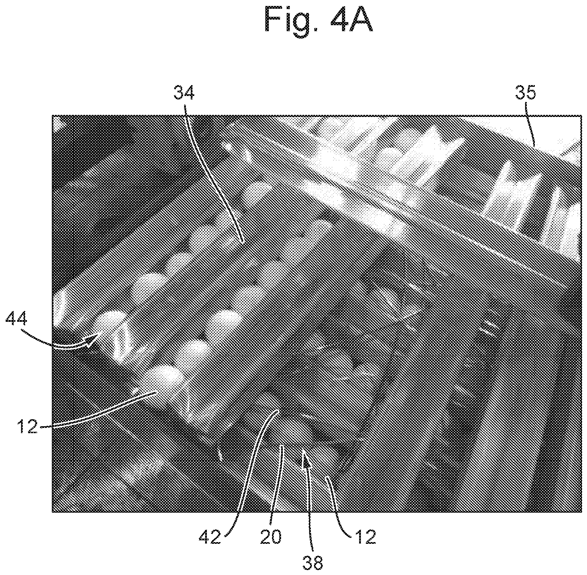

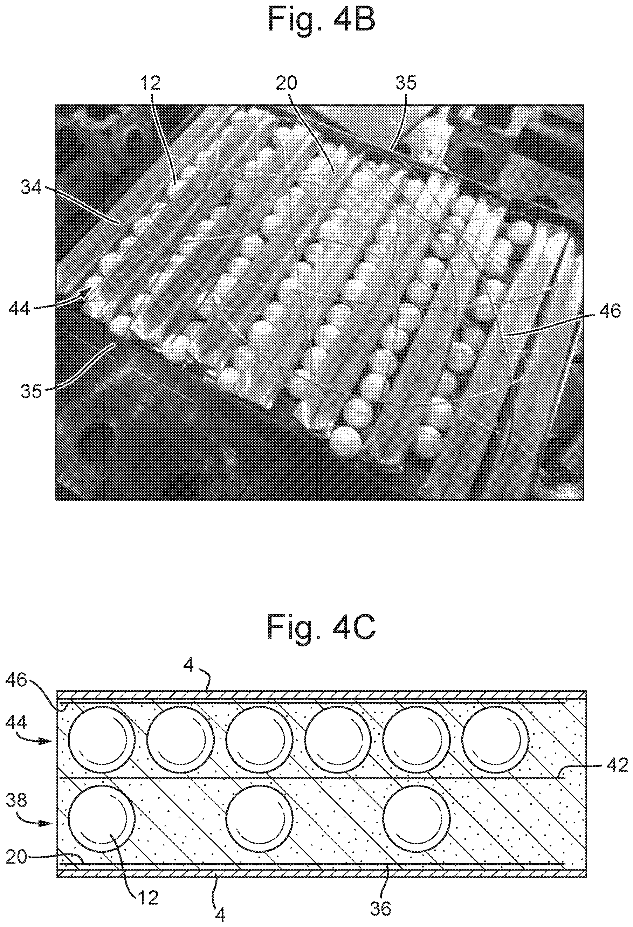

As shown in Figures 4A and 4B, the secure panel 2 is then assembled. Initially, four side walls 35 are welded onto a face plate 2, using metal inert gas (MIG) welding, such that the face plate 2 and side walls 35 define the internal volume of the secure panel 2. A first layer 36 of wires 20 is placed onto a face plate 4. A first layer 38 of ceramic spheres 12 and small pieces of dense material 34 is then arranged on top of the wires 20. The small pieces of dense material 34 and ceramic spheres 12 are arranged uniformly defining alternating rows. This ensures an even distribution of metallic foam 14 and ceramic spheres 12 in the resultant panel 2. A second layer 42 of wires 20 is placed on top of the first layer 38 of ceramic spheres 12 and small pieces of dense material 34. This is followed by a second layer 44 of ceramic spheres 12 and small pieces of dense material 34. The alternating rows of ceramic spheres 12 and small pieces of dense material 34 in the second layer 44 are at right angles to the rows in the first layer 38. Finally, a third layer 46 of wires 20 is placed on top of the second layer 44 of ceramic spheres 12 and small pieces of dense material 34, and a face plate 4 is placed thereupon and welded to the side walls 35 to seal the structure.

The structure is then placed in a foaming oven 48 and heated to 760 °C for between 15 and 20 minutes. The titanium hydride 20 begins to decompose at approximately 470 °C, releasing hydrogen gas. The release of the high pressure hydrogen acts to expand the molten aluminium creating voids. The panel 2 is cooled in calm air or using a blower to circulate air over the panel. Upon cooling the solid metallic foam is created. The aluminium foam 14 forms metallic bonds with the steel face plates 4, but not with the ceramic spheres 12 or Nichrome wires 10.

The density of the aluminium foam obtained using the above method is between 400 kg/m³ and 1300 kg/m³. The density of the core 5 of the panel 2 formed using the above method was found to be 1205 kg/m³. By way of comparison, the density of solid steel is about 7850 kg/m³. Accordingly, the secure panel 2 is significantly lighter than a solid steel panel with the same dimensions.

A schematic cross-section of the panel obtained using the above method is shown in Figure 4C. In this embodiment the volume fraction of the core 5 occupied by the ceramic spheres 12 was found to be 33%.

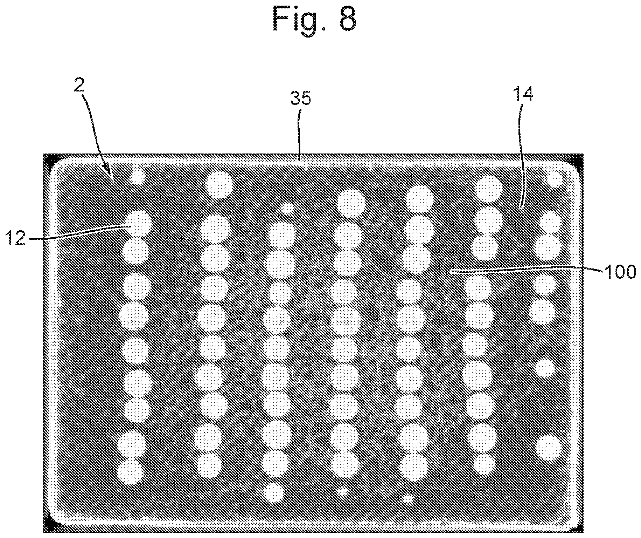

Figure 8 shows a cross-sectional X-ray computed tomography (CT) scan of the panel 2. As mentioned above, the ceramic spheres 12 have a diameter of 13 mm. Conversely, the average width of a cell 100 the aluminium foam 14 is about 2.7 mm. Accordingly, Figure 8 clearly shows that the ceramic spheres 12 have a diameter which is significantly greater than the average width of a cell 100 of the aluminium foam 14.

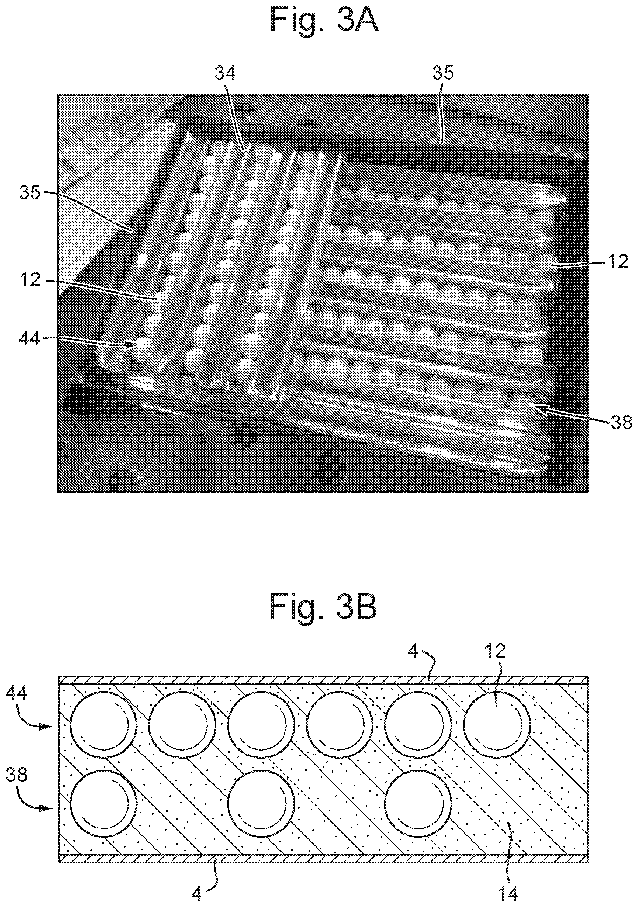

As explained below, the steel wires 20 are not essential and the secure panel 2 can be made without the incorporation of these wires 20, as shown in Figures 3A and B.

### Example 3 - Forcible entry resistance to an angle grinder and drills

### Methodology

These forcible entry resistance tests were performed at the Home Office Centre for Applied Science and Technology headquarters based in Langhurst. The tests involved the use of a handheld cordless drill, a mains powered drill and a cordless angle grinder. Both the hand held cordless drill and angle grinder were manufactured by DeWalt and featured 36 V rechargeable battery packs. The drill that received its power from the mains power supply was a Bosch GSB 21-2 RE. The drill bit used in all drill tests was a 10 mm diameter TiN coated Jobber drill attachment, in order to ensure each test was fairly conducted the drill bit was changed between each drilling operation. The cutting disc utilised for the angle grinder was a Marcrist stainless steel cutting disc with a 125 mm outer diameter and 1 mm thickness.

The tools were utilised to try and penetrate through the aluminium foam composite sandwich panels and test the resistance to a number of different attack mechanisms. Two embodiments of the panel 2 were tested. The first embodiment of the panel 2 comprised ceramic spheres and Nichrome wires embedded in the aluminium foam, as shown in Figure 4C, and the second embodiment of the panel 2 comprised only ceramic spheres embedded in the aluminium foam, as shown in Figure 3B. Both embodiments of the panel 2 measured 230 mm x 160 mm x 40 mm.

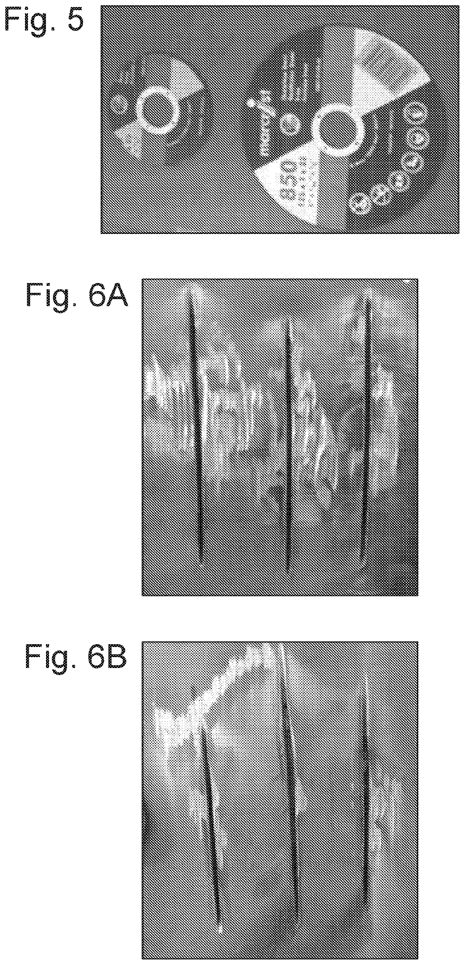

Each of the tools was used to attack each embodiment of the panel 2 three times, trying to penetrate through for up to a minute (in some cases the time surpassed a minute, but the time never exceeded 80 seconds). When the angle grinder was used the test was stopped if the angle grinder's cutting blade had worn out to such an extent that the cutting performance of the tool had essentially become negligible. The cutting performance was deemed to be negligible where the diameter of the cutting blade had been reduced from the original diameter of 125 mm to 40 mm. When the blade has a diameter of 40 mm no further cutting depth can be achieved due to the restriction of the tool itself. Figure 5 illustrates the difference in diameter between an unworn blade (right hand side) and a completely worn cutting blade (left hand side).

If complete penetration of the material was seen the time at which this occurred was noted, in other cases the depth of penetration was measured using the depth function of a pair Vernier calipers.

The panels 2 were ranked for each test as base, high or advanced. A "base" ranking is given when it would take less than or equal to 5 minutes to penetrate the panel and create a 'man sized hole'. A "high" ranking is given when it would take more than 5 minutes but less than or equal to 15 minutes to penetrate the panel and create a 'man sized hole'. Finally, an "advanced" ranking is given when it would take more than 15 minutes to penetrate the panel and create a 'man sized hole'.

### Results and discussion

### 1. Resistance to cordless angle grinder attacks

As mentioned above, two embodiments of the panel 2 of the invention were each tested three times with a cordless angle grinder to determine their resistance against attack therefrom. None of the attacks breached either of the panels 2, and the times at which the test was stopped and the outcome of each test are given below in tables 1 and 2. Additionally, a photo showing the incisions made in the first embodiment of the panel 2 comprising ceramic spheres 12 and Nichrome wires 10 embedded in the aluminium foam 14 is shown in Figure 6A, and a photo showing the incisions made in the second embodiment of the panel 2 comprising only ceramic spheres 12 embedded in the aluminium foam 14 is shown in Figure 6B.

**Table 1: Results of forcible entry resistance tests using an angle grinder on a panel comprising ceramic spheres and Nichrome wires embedded in the aluminium foam (Embodiment 1)**

| Test Number | Duration of Test (seconds) | Testing Outcome |
|---|---|---|
| 1 | 62 | Cutting blade completely worn - diameter of blade after test was 40 mm. |
| | | Little penetration (4-5 mm). |
| 2 | 47 | Cutting blade completely worn - diameter of blade after test was 40 mm. |
| | | Little penetration (5-6 mm). |
| 3 | 57 | Cutting blade completely worn - diameter of blade after test was 40 mm. |
| | | Little penetration (4-5 mm). |

**Table 2: Results of forcible entry resistance tests using an angle grinder on a panel comprising only ceramic spheres embedded in the aluminium foam (Embodiment 2)**

| Test Number | Duration of Test (seconds) | Testing Outcome |
|---|---|---|
| 1 | 78 | Significant wear seen to blade, minimal cutting ability retained - diameter of blade after test was 95 mm. |
| | | Moderate/little penetration (6-7 mm). |
| 2 | 75 | Significant wear seen to blade, minimal cutting ability retained - diameter of blade after test was 87 mm. |
| | | Moderate/little penetration (6-7 mm). |
| 3 | 65 | Significant wear seen to blade, minimal cutting ability retained - diameter of blade after test was 89 mm. |
| | | Moderate/little penetration (7-8 mm). |

The first embodiment of the panel 2 in which the core comprised metallic Nichrome wires 10 and ceramic spheres 12 embedded in the aluminium foam 14 outperformed the second embodiment of the panel 2 in which the core only comprised ceramic spheres 12 embedded in the aluminium foam 14. In each of the tests on the first embodiment of panel 2, the tests was ceased due to the fact that the angle grinders cutting blade had experience maximum wear to the effect of completely hindering cutting ability.

Furthermore, the penetration depth of each incision was lower than that seen in the testing of the second embodiment of panel 2 which contained only ceramic spheres.

As can be seen in table 2, the wear observed to the cutting blade in the angle grinder resistance tests that were implemented on the first embodiment of panel 2 was not as substantial as seen on the second embodiment of panel 2. Additionally, all of the attacks were ceased due to the time limit being achieved and the depth of incision of each of the cuts was more significant.

Accordingly, it is clear that the first embodiment of panel 2 that comprised Nichrome wires 10 and ceramic spheres 12 embedded into the metallic foam 14 core showed better resistance to attack. However, both embodiments showed significant resistance and were ranked as "advanced" for each test.

In contrast, standard steel panels can be cut through by an angle grinder. The time it would take to cut through a steel panel would depend on the thickness of the panel and the hardness of the steel. Accordingly, when solid steel panels are assessed it is only a question of how long it will take to cut through these with an angle grinder.

In contrast, panels of the present invention were able to wear out the cutting blades and thus defeat the angle grinder.

### 2. Resistance to cordless drill attacks

Similarly, the two embodiments of panels 2 were each tested three times with a 36 V battery powered drill to determine their resistance against attack therefrom. The outcome of the tests are given below in tables 3 and 4.

**Table 3: Results of forcible entry resistance tests using a cordless drill on a panel comprising ceramic spheres and Nichrome wires embedded in the aluminium foam (Embodiment 1)**

| Test Number | Duration of Test (seconds) | Testing Outcome |
|---|---|---|
| 1 | 65 | Little progress - depth of penetration of 7 mm. |
| 2 | 63 | Little progress - depth of penetration of 5 mm. |
| 3 | 64 | Little progress - depth of penetration of 7.5 mm. |

**Table 4: Results of forcible entry resistance tests using a cordless drill on a panel comprising only ceramic spheres embedded in the aluminium foam (Embodiment 2)**

| Test Number | Duration of Test (seconds) | Testing Outcome |
|---|---|---|
| 1 | 64 | Significant progress - depth of penetration of 35 mm. |
| 2 | 30 | Complete penetration of panel. |
| 3 | 66 | Significant progress - depth of penetration of 30 mm. |

As observed in the angle grinder resistance testing, the first embodiment of panel 2 which had a core comprising aluminium foam, Nichrome wires and ceramic spheres had superior resistance to attack when compared to the second embodiment of the sandwich panel 2. In each of the tests performed on the first embodiment of panel 2 the test concluded due to the time limit being reached. The damage done was minimal in each case with the maximum penetration observed to be 7.5 mm. The second embodiment, on the other hand, had very contrasting results. In each case significant damage was caused to the panel 2, the minimum penetration achieved was 30 mm, in one test complete penetration of the material was seen in just 30 seconds. In the other two tests, the depth of penetration was achieved relatively quickly (20-30 seconds) and progress was then significantly slowed due to contact with a ceramic sphere.

The first embodiment of panel 2 comprising ceramic spheres and Nichrome wires embedded in the metallic foam core was ranked as advanced for each test, while the second embodiment of panel comprising only ceramic spheres embedded in the metallic foam core was placed in to the base category for each test.

### 3. Resistance to mains powered drill attacks

An identical procedure was employed for testing the two embodiments of panel 2 with a mains powered drill, and the outcome of these tests is given in tables 5 and 6.

**Table 5: Results of forcible entry resistance tests using a mains powered drill on a panel comprising ceramic spheres and Nichrome wires embedded in the aluminium foam (Embodiment 1)**

| | | |
|---|---|---|
| Test Number | Duration of Test (seconds) | Testing Outcome |
| 1 | 35 | Complete penetration of panel. |
| 2 | 47 | Little progress - drill bit fractured - penetration of 8 mm. |
| 3 | 64 | Little progress - depth of penetration of 9 mm. |

**Table 6: Results of forcible entry resistance tests using a mains powered drill on a panel comprising only ceramic spheres embedded in the aluminium foam (Embodiment 2)**

| Test Number | Duration of Test (seconds) | Testing Outcome |
|---|---|---|
| 1 | 61 | Moderate progress - depth of penetration of 26 mm. |
| 2 | 31 | Complete penetration of panel. |
| 3 | 63 | Moderate progress - depth of penetration of 18 mm. |

The results obtained show considerable variation; both embodiments of panel were completely penetrated once by the mains powered drill. However, the further two tests performed on the first embodiment of panel 2 comprising ceramic spheres and Nichrome wires embedded in the aluminium foam showed little damage, in one of the said tests the drill bit fractured after 47 seconds having only penetrated the panel to a depth of 8 mm.

Again, the first embodiment of panel 2 comprising ceramic spheres and Nichrome wires embedded in the aluminium foam seemed to show a greater resistance to the more powerful mains powered drill. The two drilling attempts were stopped at penetration depth of 8 mm (20% of the total thickness), while complete penetration was achieved once.

The second embodiment of the panel 2, comprising only ceramic spheres embedded in the aluminium foam, showed moderate resisting to the attacks from the mains powered drill. The two tests where the drill was unable to completely penetrate the panel 2 resulted in a maximum depth of penetration of 26 mm (65% of the thickness) in the allocated tested time frame. Similar to the results observed in the battery powered drill resistance tests, the penetration depth was achieved in a relatively short period of time of 20 to 30 seconds at which point the progress was considerably slowed, presumably because the drill came into contact with a ceramic particle.

The tests in which complete penetration was observed were ranked under the base category of resistance. However, the two tests performed on the panel 2 comprising ceramic spheres and Nichrome wires embedded in the aluminium foam in which little damage was caused were assigned the ranking of advanced. Similarly, the additional tests performed on the panel 2 comprising only ceramic spheres embedded in the aluminium foam achieving penetration depths of 26 and 18 mm were ranked under the high classification of resistance.

Viewing the results from the mains powered and battery powered drill tests together, 5 out of 6 attempted attacks were defeated by the first embodiment of panel 2 comprising ceramic spheres and Nichrome wires embedded in the aluminium foam. Accordingly, the first embodiment of panel 2 successfully resisted 83% of drill attacks. The ability to resist the drill attack depends on the distribution of the ceramic particles in the foamed core, i.e. the panel resists attack when a ceramic particle is in the path of the drill. The distribution of the ceramic particles is somewhat random due to the nature of the foaming process. Accordingly, complete penetration is possible when no ceramic particles are encounter by the drill. However, with approx. 16% frequency of occurrence, successful penetration by a drill is unlikely.

Viewing the results from the mains powered and battery powered drill tests together, 4 out of 6 attempted attacks were defeated by the second embodiment of panel 2 comprising only ceramic spheres embedded in the aluminium foam. Accordingly, the second embodiment of panel 2 successfully resisted 67% of drill attacks.

Drilling attacks on steel plates of comparable mass to the tested panels are successful in almost all cases. The drilling time depends on the thickness and hardness of the metal. Conversely, the panels of the present invention stopped drilling attacks with a success rate of 84%, for the first embodiment of panel 2 comprising ceramic spheres and Nichrome wires embedded in the aluminium foam, and 66%, for the second embodiment of panel 2 comprising only ceramic spheres embedded in the aluminium foam. Accordingly, both embodiments of the present invention show a significant improvement over steel panels.

The inventors note that the robustness of the drilling protection depends on uniform distribution of ceramic spheres in the foamed core, thereby ensuring that a drill cannot penetrate the panel without coming into contact with a ceramic sphere. Based on the above results, it appears that the wires aid in a more uniform and even distribution of ceramic inclusions in the metallic foam matrix. Additionally, although drilling of isolated holes is possible in some instances, it is extremely unlikely that a pattern of holes (to create a man hole opening, for example) could be achieved.

The inventors note that the resistance to attack could be further improved by including a higher volume fraction of ceramic spheres in the core and/or more evenly distributing the ceramic spheres within the core.

### Example 4 - Forcible entry resistance to an abrasive water jet

### Methodology

A cylinder 50 of aluminium foam 14 comprising ceramic spheres 12 was tested for its resistance to an abrasive water jet. The cylinder 50 had a length of 150 mm and a diameter of 60 mm.

An abrasive water jet cutting apparatus was directed at the outer surface of cylinder 50 such that the direction of the jet was from the right hand side of the cylinder 50 to the left. The jet was maintained on the cylinder 50 for about 1 minute.

### Results and discussion

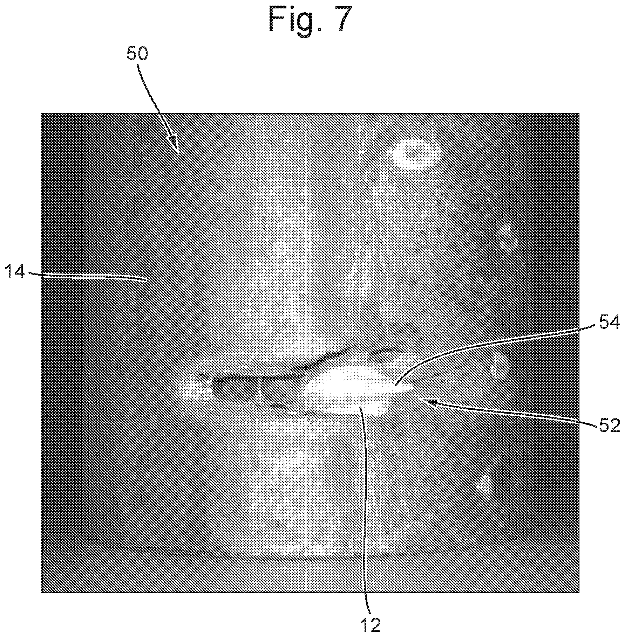

A picture of the cylinder 50 after the application of the abrasive water jet is shown in Figure 7.

Where the water jet came into contact with the aluminium foam 14 it started to wear the foam down, creating a cut 52 in the cylinder 50. However, when the water jet came into contact with a ceramic sphere 12 the sphere 12 was worn down fastest on its outer faces. This changed the shape of the ceramic particle 12 such that it comprised a knife edge type ridge 54. This ridge 54 split the highly focused flow of the jet into a spray like flow, and the jet was unable to cut further through the material aluminium foam 14.

Accordingly, a panel 2 of the present invention is also be able to resist attack from an abrasive water jet cutting apparatus.

### Example 5 - Further embodiments

In some applications, it may be desirable to reduce the mass of the panels 2. In these embodiments the face plates could comprise aluminium. It will be appreciated that it would not be possible to manufacture panels comprising aluminium face plates using the method of example 2 as the face plates would melt due to the high temperatures used during the foaming process. Instead the core, comprising the metallic foam, the ceramic inclusions and optionally the wires, could be formed in a mould. The face plates could then be bonded to the core by using epoxy. Epoxy could be applied to the inner surface of the face plates, the core and face plates could then be clamped together and left to harden.

Alternatively, the face plates could be bonded to the core through metallurgical bonding between the face sheets and Al foam.

Similarly, it would be possible to reduce the mass of the panel by using face plates comprising a composite, such as a carbon fibre reinforced polymer (CFRP). These face plates could have additionally functionality built in. For instance, electrical circuits could be built into the carbon fibre reinforce polymer face plate and configured to activate an alarm if the face plate is breached. Again, it would be necessary to first form the core using a mould and to then bond the face plates to the core.

Alternatively, in an embodiment where additional resistance to attacks is required ceramic face plates could be used. Again, it would not be possible to use the method of example 2 because the foam would not bond to the ceramic plates during the foaming process. Accordingly, the ceramic plates would have to be bonded to core after it had been formed. Again, this could be achieved using epoxy or through reaction-brazing based on CuAgTi brazes.

The mass of the panels would also be decreased slightly if the metallic foam comprised an open-cell foam, i.e. a foam in which the porous voids are connected throughout the structure. Again, to obtain an open-cell foamed core it would be necessary to produce the foam in a mould. The mould would define the open foam structure and would also comprise the ceramic inclusions and optionally the wires. The face plates could then be bonded to the core. As well as having a decreased mass, a panel comprising an open-cell foam could be advantageously used in thermal dissipation application. This is because it would have high thermal conductivity properties coupled with a large internal surface area and a cooling media, such as a liquid or gas, can easily flow through the porous structure (Gibson, 2000).

The metallic core could also comprise other metals, such as steel. This would increase the mass of the panel, and it would be necessary to manufacture the panel by forming the core in a mould and then bonding the face plates thereto. However, a panel comprising a steel foam would have a higher resistance to heat than a panel comprising an aluminium foam and could therefore be used in applications where it would be exposed to temperatures near or above the melting point of aluminium. This may be necessary if the panel is intended to be situated adjacent to an engine for instance.

Finally, the wires could comprise ceramics instead of Nichrome. This could be advantageous due to the higher melting point of ceramics.

### Summary

Security panels 2 comprising steel face plates 4 and a core 5 comprising only ceramic spheres 12 embedded in aluminium foam 14 were ranked in the advanced category for all attacks from an angle grinder. These panels 2 were also ranked in the high category in two out of three attacks from a mains powered drill. Additionally, the ceramic spheres prevent attacks from abrasive water jets.

Security panels 2 comprising Nichrome wires 10 and ceramic spheres 12 embedded in aluminium foam 14 showed an even higher resistance to attack. The panel was ranked as "advanced" against all attacks from an angle grinder and cordless drill, and was also ranked as advanced in two out of three attacks from a mains powered drill. It is hypothesised that this improved performance against attacks from an angle grinder and drill may be because the Nichrome wires hold the ceramic spheres in place while the core is formed, leading to a more even distribution of ceramic spheres in the resultant panel.

The panels of the present invention therefore show improved resistance when compared with solid steel panels, and therefore show potential for use in applications such as safety doors, fortified walls, panic boxes and bank vaults. Additionally, the panels of the present invention have a much lower density than prior art panels which means they are easier to transport and install and can be used in systems where heavier panels might be inappropriate, such as safeguard rooms in elevated structures and safety doors.

## Claims

1. A shock absorption panel comprising a metallic foam (14) having a plurality of rigid particles (12) therein, **characterized in that** said rigid particles (12) are substantially spherical and the rigid particles (12) have a mean diameter of at least 1 mm.

2. An article of footwear comprising a sole, the sole comprising the shock absorption panel of claim 1.

3. A security panel (2) comprising a face plate (4) and the shock absorption panel of claim 1, wherein the face plate (4) is disposed adjacent to the shock absorption panel.

4. A security panel according to claim 3, wherein the metallic foam (14) comprises aluminium, steel, zinc, titanium or a nickel alloy, preferably aluminium.

5. A security panel according to either claim 3 or claim 4, wherein the security panel comprises a second face plate (4) disposed opposite to the first face plate, such that the metallic foam creates an inner core (5), preferably wherein the security panel comprises side walls, which extend between the first and second face plates.

6. A security panel according to any one of claims 3 to 5, wherein the or each face plate (4) comprises a ceramic material, a composite material, a polymer, a metal or a metal alloy, preferably wherein the or each face plate comprises steel.

7. A security panel according to any one of claims 3 to 6, wherein the metallic foam comprises cells having a mean width, and the rigid particles have a mean diameter or width, and wherein the mean diameter or width of the rigid particles is at least as large as the mean width of the cells.

8. A security panel according to any one of claims 3 to 7, wherein the rigid particles:
- comprise ceramic particles;
- have a mean diameter between 2 mm and 90 mm; and/or
- are substantially disposed in two or more layers (38, 44).

9. A security panel according to any one of claims 3 to 8, wherein the volume fraction of the metallic foam occupied by the rigid particles is at least 5%, 10%, 15%, 20%, 25% or 30% of the foam.

10. A security panel according to any one of claims 3 to 9, wherein the metallic foam comprises at least one wire (10, 20) disposed therein, preferably wherein the foam comprises a plurality of wires disposed therein.

11. A security panel according to claim 10, wherein the or each wire comprises a metal, a metal alloy or a ceramic material, preferably wherein the or each wire comprise a metal alloy, and the metal alloy comprises Nichrome.

12. A method of preventing forced entry into a secure zone, the method comprising applying the security panel according to any one of claims 3 to 11 to a secure zone.

13. A safe, a safety door, a fortified wall, a panic room, a panic box, a bank vault, a prison or prison facility, a data centre, or a vehicle comprising the security panel according to any one of claims 3 to 11.

14. A method of manufacturing a security panel (2), the method comprising providing at least one face plate (4), and disposing a metallic foam 2. (14) with a plurality of substantially spherical rigid particles 2. (12) having a mean diameter of at least 1 mm disposed therein adjacent to the at least one face plate, to thereby produce the security panel.

## Patentansprüche

1. Stoßdämpfungsplatte, die einen Metallschaum (14) mit einer Mehrzahl steifer Teilchen (12) darin umfasst, **dadurch gekennzeichnet, dass** die steifen Teilchen (12) im Wesentlichen sphärisch sind, und wobei die steifen Teilchen (12) einen mittleren Durchmesser von mindestens 1 mm aufweisen.

2. Schuhwerkartikel, der eine Sohle umfasst, wobei die Sohle die Stoßdämpfungsplatte aus Anspruch 1 umfasst.

3. Sicherheitsplatte (2), die eine Blende (4) und die Stoßdämpfungsplatte aus Anspruch 1 umfasst, wobei die Blende (4) angrenzend an die Stoßdämpfungsplatte angeordnet ist.

4. Sicherheitsplatte nach Anspruch 3, wobei der Metallschaum (14) Aluminium, Stahl, Zink, Titan oder eine Nickellegierung umfasst, vorzugsweise Aluminium.

5. Sicherheitsplatte nach Anspruch 3 oder Anspruch 4, wobei die Sicherheitsplatte eine zweite Blende (4) umfasst, die entgegengesetzt zu der ersten Blende angeordnet ist, so dass der Metallschaum einen inneren Kern (5) erzeugt, wobei die Sicherheitsplatte vorzugsweise Seitenwände umfasst, die sich zwischen der ersten und der zweiten Blende erstrecken.

6. Sicherheitsplatte nach einem der Ansprüche 3 bis 5, wobei die oder jede Blende (4) einen Keramikwerkstoff, einen Verbundwerkstoff, ein Polymer, ein Metall oder eine Metalllegierung umfasst, wobei die oder jede Blende vorzugsweise Stahl umfasst.

7. Sicherheitsplatte nach einem der Ansprüche 3 bis 6, wobei der Metallschaum Zellen mit einer mittleren Breite umfasst, und wobei die steifen Teilchen einen mittleren Durchmesser oder eine mittlere Breite umfassen, und wobei der mittlere Durchmesser oder die mittlere Breite der steifen Teilchen mindestens so groß ist wie die mittlere Breite der Zellen.

8. Sicherheitsplatte nach einem der Ansprüche 3 bis 7, wobei die steifen Teilchen:
- Keramikteilchen umfassen;
- einen mittleren Durchmesser zwischen 2 mm und 90 mm aufweisen; und/oder
- sich im Wesentlichen in zwei oder mehr Schichten (38, 44) befinden.

9. Sicherheitsplatte nach einem der Ansprüche 3 bis 8, wobei der Volumenanteil des Metallschaums, der durch die steifen Teilchen eingenommen wird, mindestens 5%, 10%, 15%, 20%, 25% oder 30% des Schaums beträgt.

10. Sicherheitsplatte nach einem der Ansprüche 3 bis 9, wobei der Metallschaum mindestens einen sich darin befindenden Draht (10, 20) umfasst, wobei der Schaum vorzugsweise eine Mehrzahl von sich darin befindenden Drähten umfasst.

11. Sicherheitsplatte nach Anspruch 10, wobei der oder jeder Draht ein Metall, eine Metalllegierung oder einen Keramikwerkstoff umfasst, wobei der oder jeder Draht vorzugsweise eine Metalllegierung umfasst, und wobei die Metalllegierung Nichrome umfasst.

12. Verfahren zum Verhindern eines erzwungenen Eindringens in eine Sicherheitszone, wobei das Verfahren das Applizieren der Sicherheitsplatte nach einem der Ansprüche 3 bis 11 auf eine Sicherheitszone umfasst.

13. Safe, eine Sicherheitstür, eine verstärkte Wand, ein Panikraum, eine Panikbox, ein Bankschließfach, ein Gefängnis oder eine Gefängnisanstalt, ein Datenzentrum oder ein Fahrzeug, umfassend die Sicherheitsplatte nach einem der Ansprüche 3 bis 11.

14. Verfahren zur Herstellung einer Sicherheitsplatte (2), wobei das Verfahren das Bereitstellen mindestens einer Blende (4) umfasst und das Platzieren eines Metallschaums (14) mit einer Mehrzahl von im Wesentlichen sphärischen steifen Teilchen (12) mit einem mittleren Durchmesser von mindestens 1 mm, die sich darin angrenzend an die mindestens eine Blende befinden, um dadurch die Sicherheitsplatte zu erzeugen.

## Revendications

1. Panneau d'absorption des chocs comprenant une mousse métallique (14) ayant une pluralité de particules rigides (12) en son sein, **caractérisé en ce que** lesdites particules rigides (12) sont sensiblement sphériques et les particules rigides (12) ont un diamètre moyen d'au moins 1 mm.

2. Article chaussant comprenant une semelle, la semelle comprenant le panneau d'absorption des chocs selon la revendication 1.

3. Panneau de sécurité (2) comprenant une plaque frontale (4) et le panneau d'absorption des chocs selon la revendication 1, la plaque frontale (4) étant disposée de manière adjacente au panneau d'absorption des chocs.

4. Panneau de sécurité selon la revendication 3, la mousse métallique (14) comprenant de l'aluminium, de l'acier, du zinc, du titane ou un alliage de nickel, de préférence de l'aluminium.

5. Panneau de sécurité selon la revendication 3 ou 4, le panneau de sécurité comprenant une seconde plaque frontale (4) disposée à l'opposé de la première plaque frontale, de sorte que la mousse métallique crée un noyau intérieur (5), de préférence le panneau de sécurité comprenant des parois latérales, qui s'étendent entre les première et seconde plaques frontales.

6. Panneau de sécurité selon l'une quelconque des revendications 3 à 5, la ou chaque plaque frontale (4) comprenant un matériau céramique, un matériau composite, un polymère, un métal ou un alliage métallique, de préférence la ou chaque plaque frontale comprenant de l'acier.

7. Panneau de sécurité selon l'une quelconque des revendications 3 à 6, la mousse métallique comprenant des cellules ayant une largeur moyenne, et les particules rigides ayant un diamètre ou une largeur moyenne, et la largeur ou le diamètre moyen des particules rigides étant au moins aussi grand que la largeur moyenne des cellules.

8. Panneau de sécurité selon l'une quelconque des revendications 3 à 7, les particules rigides :
- comprenant des particules de céramique ;
- ayant un diamètre moyen compris entre 2 mm et 90 mm ; et/ou
- étant sensiblement disposées en deux couches ou plus (38, 44).

9. Panneau de sécurité selon l'une quelconque des revendications 3 à 8, la fraction volumique de la mousse métallique occupée par les particules rigides étant d'au moins 5 %, 10 %, 15 %, 20 %, 25 % ou 30 % de la mousse.

10. Panneau de sécurité selon l'une quelconque des revendications 3 à 9, la mousse métallique comprenant au moins un fil (10, 20) disposé en son sein, de préférence la mousse comprenant une pluralité de fils disposés en son sein.

11. Panneau de sécurité selon la revendication 10, le ou chaque fil comprenant un métal, un alliage métallique ou un matériau céramique, de préférence le ou chaque fil comprenant un alliage métallique, et l'alliage métallique comprenant du nichrome.

12. Procédé pour empêcher l'entrée forcée dans une zone sécurisée, le procédé comprenant l'étape consistant à appliquer le panneau de sécurité selon l'une quelconque des revendications 3 à 11 à une zone sécurisée.

13. Coffre-fort, porte de sécurité, mur fortifié, pièce de sécurité, boîte de sécurité, chambre forte de banque, prison ou établissement pénitentiaire, centre de données ou véhicule comprenant le panneau de sécurité selon l'une quelconque des revendications 3 à 11.

14. Procédé de fabrication d'un panneau de sécurité (2), le procédé comprenant les étapes consistant à fournir au moins une plaque frontale (4), et à disposer une mousse métallique (14) avec une pluralité de particules rigides sensiblement sphériques (12) ayant un diamètre moyen d'au moins 1 mm disposées en son sein de manière adjacente à l'au moins une plaque frontale, pour produire ainsi le panneau de sécurité.
